# EUROPÄISCHE PATENTSCHRIFT

(11) **EP 2 229 550 B1**
(45) Veröffentlichungstag und Bekanntmachung des Hinweises auf die Patenterteilung: **12.10.2011**
(21) Anmeldenummer: 08870162.8
(22) Anmeldetag: 15.12.2008
(51) Int. Cl.: F16K 5/04, F16K 11/085, F02M 25/07

(54) **ABGASRÜCKFÜHRVENTIL FÜR EIN KRAFTFAHRZEUG**
EXHAUST GAS RECIRCULATION VALVE FOR A MOTOR VEHICLE
SOUPAPE DE RECYCLAGE DES GAZ D'ÉCHAPPEMENT POUR UN VÉHICULE AUTOMOBILE

(30) Priorität: 04.01.2008 DE 102008003177
(43) Veröffentlichungstag der Anmeldung: 22.09.2010
(73) Patentinhaber: Continental Automotive GmbH, 30165 Hannover (DE)
(72) Erfinder: BONANNO, Rosario, 65812 Bad Soden (DE)
(86) Internationale Anmeldenummer: PCT/EP2008/067571
(87) Internationale Veröffentlichungsnummer: WO 2009/087019

(56) Entgegenhaltungen:
- EP-A- 1 335 158
- EP-A- 1 435 451
- DE-A1- 4 431 711
- DE-A1- 19 631 337
- DE-A1- 19 927 673
- US-A- 5 273 073

## Beschreibung

Die Erfindung bezieht sich auf ein Abgasrückführventil für ein Kraftfahrzeug. Ventile sind bekannt. In der EP 1 335 158 B1 wird ein Klappenventil für Brennstoffaggregate beschrieben. Dieses Klappenventil weist einen Gaseintritt und zwei Gasaustritte auf. Jeder Gasaustritt kann mit einer Ventilklappe verschlossen werden, wobei beide Ventilklappen senkrecht zueinander angeordnet sind. Dadurch ist es möglich, die Gesamtmenge an Gas entweder durch den einen Gasaustritt oder den anderen Gasaustritt zu leiten. In der Regel werden zwei Gasaustritte vorgesehen, um das Gas wahlweise hinter dem jeweiligen Gasaustritt zu kühlen oder ungekühlt weiterzuleiten. Das jeweilige Umschalten erfolgt dann über die Ventilklappen, die gemeinsam an einer Welle drehbar gelagert sind. Die Anordnung solcher Ventilklappen ist jedoch nicht generell vorteilhaft. Bei der Herstellung von Klappenventilen ist es in der Regel problematisch, eine entsprechende Justierung der jeweiligen Ventilklappe vorzunehmen. Meist kommt es dabei zu nachteiligen Abdichtproblemen, die sich negativ auf den Betrieb des Klappenventils auswirken.

Der Erfindung liegt die Aufgabe zugrunde, ein Abgasrückführventil für ein Kraftfahrzeug zu schaffen, bei dem auf die Anordnung nachteiliger Ventilklappen verzichtet werden kann.

Die der Erfindung zugrunde liegende Aufgabe wird durch ein Abgasrückführventil für ein Kraftfahrzeug gelöst, das aus einem rohrförmigen Ventilgehäuse besteht, das einen Gaseintritt E, einen ersten Gasaustritt A1 und einen zu diesem benachbart angeordneten zweiten Gasaustritt A2 aufweist, die jeweils von der Mantelaußenfläche des rohrförmigen Ventilgehäuses abzweigen, bei dem innerhalb des rohrförmigen Ventilgehäuses ein drehbar gelagerter Ventilkörper angeordnet ist, der als Hohlkörper mit einer halbzylinderförmigen Mantelfläche, die eine seitliche Durchtrittsöffnung aufweist, ausgebildet ist, wobei die Längsachse des Zylinders, der die halbzylinderförmige Mantelfläche definiert, die Drehachse des Ventilkörpers bildet, und wobei zwischen der Drehachse und der halbzylinderförmigen Mantelfläche direkt gegenüber der seitlichen Durchtrittsöffnung eine Trennwand angeordnet ist und zwischen der Drehachse und der halbzylinderförmigen Mantelfläche direkt gegenüber dem Bereich ohne Durchtrittsöffnung dem Gasdurchgang angeordnet ist, bei dem der Gaseintritt E in der Draufsicht gesehen in seiner dem ersten Gasaustritt A1 und dem zweiten Gasaustritt A2 zugewandten Seite eine im Ventilgehäuse innen senkrecht angeordnete Sperrwand aufweist, deren Höhe mindestens der Länge L des Ventilkörpers entspricht, und die in der geschlossenen Position des Abgasrückführventils bündig am Gasdurchgang anliegt. Der Ventilkörper wird im Betrieb des Abgasrückführventils durch die Drehbewegung in die gewünschte Position gebracht, wobei jeweils einzustellen ist, ob und wenn ja in welcher Menge das Abgas durch den ersten Gasaustritt A1 oder den zweiten Gasaustritt A2 geleitet wird. Das Ventilgehäuse und der Ventilkörper bestehen in der Regel aus metallischen Werkstoffen. Es hat sich in überraschender Weise gezeigt, dass sich das Abgasrückführventil über längere Betriebszeiten auch dann zuverlässig betreiben lässt, wenn auf die Anordnung von Ventilklappen gänzlich verzichtet wird. Abdichtungsprobleme werden dabei in vorteilhafter Weise vermieden.

Eine bevorzugte Ausgestaltung der Erfindung besteht darin, dass als Drehachse eine Welle senkrecht angeordnet ist. Die Welle wird dabei beispielsweise besonders vorteilhaft an den Ventilkörper angeschweißt oder angeklebt und bildet somit mit dem Ventilkörper eine Einheit. Durch die Anordnung einer Welle als Drehachse lässt sich die Positionierung des Ventilkörpers im Ventilkörper besonders vorteilhaft einstellen.

Gemäß einer weiteren bevorzugten Ausgestaltung der Erfindung werden als Gaseintritt E, als erster Gasaustritt A1 und als zweiter Gasaustritt A2 jeweils Rohrstücke angeordnet, deren Längsachsen auf gleicher Ebene liegen. Die Anordnung von Rohrstücken lässt sich relativ problemlos vornehmen, wobei die Anordnung der Längsachsen auf der gleichen Ebene beziehungsweise in gleicher Höhe die konstruktive Ausgestaltung des Ventilkörpers erleichtert.

Nach einer weiteren bevorzugten Ausgestaltung der Erfindung ist die Durchtrittsöffnung in der Seitenansicht kreisförmig ausgebildet. Dabei ist vorteilhaft, dass die Durchtrittsöffnung durch eine einzige Bohrung relativ schnell und problemlos im Ventilkörper angeordnet werden kann.

Gemäß einer weiteren bevorzugten Ausgestaltung der Erfindung verlaufen die Längsachsen des ersten Gasaustritts A1 und des zweiten Gasaustritts A2 im Winkel von 90° zueinander. Dies ermöglicht eine besonders vorteilhafte Einstellung beispielsweise Verteilung der Abgasmengen auf den ersten Gasaustritt A1 und den zweiten Gasaustritt A2 mit Hilfe des Ventilkörpers.

Die Erfindung wird nachfolgend anhand der Zeichnung (Fig. 1 bis Fig. 6) näher und beispielhaft erläutert.
- Fig. 1: zeigt das Abgasrückführventil mit dem Ventilgehäuse und dem Ventilkörper in Form einer Explosionszeichnung dreidimensional.
- Fig. 2: zeigt die Rückseite des Ventilkörpers dreidimensional.
- Fig. 3: zeigt das Abgasrückführventil im Querschnitt in der völlig geschlossenen Position.
- Fig. 4: zeigt das Abgasrückführventil im Querschnitt in der für den zweiten Gasaustritt A2 geöffneten Position.
- Fig. 5: zeigt das Abgasrückführventil im Querschnitt in der für den ersten Gasaustritt A1 und den zweiten Gasaustritt A2 geöffneten Position.
- Fig. 6: zeigt das Abgasrückführventil im Querschnitt in der für den ersten Gasaustritt A1 geöffnete Position.

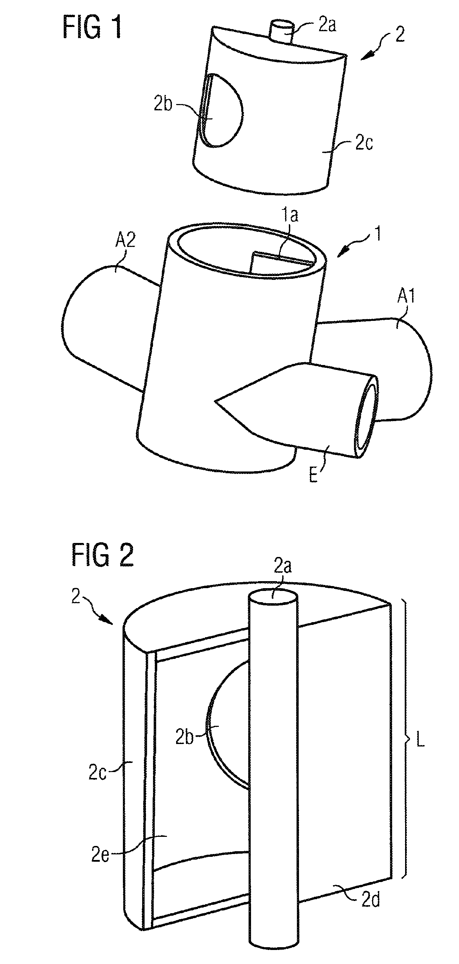

In Fig. 1 ist das Abgasrückführventil für ein Kraftfahrzeug mit dem Ventilgehäuse 1 und dem Ventilkörper 2 dreidimensional in Form einer Explosionszeichnung dargestellt. Das Abgasrückführventil für ein Kraftfahrzeug besteht aus einem rohrförmigen Ventilgehäuse 1, das einen Gaseintritt E, einen ersten Gasaustritt A1 und einen zu diesem benachbart angeordneten zweiten Gasaustritt A2 aufweist, die jeweils von der Mantelaußenfläche des rohrförmigen Ventilgehäuses 1 abzweigen. Innerhalb des rohrförmigen Ventilgehäuses 1 ist die Anordnung eines drehbar gelagerten Ventilkörpers 2 vorgesehen, der als Hohlkörper mit einer halbzylinderförmigen Mantelfläche 2c, die eine seitliche Durchtrittsöffnung 2b aufweist, ausgebildet ist. Die Durchtrittsöffnung 2b ist in der Seitenansicht kreisförmig ausgebildet. Die Längsachse des Zylinders, der die halbzylinderförmige Mantelfläche 2c definiert, bildet die Drehachse 2a des Ventilkörpers 2. Der Gaseintritt E weist in der Draufsicht gesehen auf seiner dem ersten Gasaustritt A1 und dem zweiten Gasaustritt A2 zugewandten Seite eine im Ventilgehäuse 1 innen senkrecht angeordnete Sperrwand 1a auf.

In Fig. 2 ist die Rückseite des Ventilkörpers 2 dreidimensional dargestellt. Als Drehachse 2a ist dabei eine Welle senkrecht angeordnet. Zwischen der Drehachse 2a und der halbzylinderförmigen Mantelfläche 2c ist direkt gegenüber der seitlichen Durchtrittsöffnung 2b ein Trennwand 2d angeordnet. Zwischen der Drehachse 2a und der halbzylinderförmigen Mantelfläche 2c ist direkt gegenüber dem Bereich ohne Durchtrittsöffnung ein Gasdurchgang 2e angeordnet beziehungsweise vorgesehen. Die Länge L des Ventilkörpers 2 entspricht in der konstruktiven Ausgestaltung der Höhe der im Ventilgehäuse innen senkrecht angeordneten Sperrwand (nicht dargestellt), die in der geschlossenen Position des Abgasrückführventils (nicht dargestellt) bündig am Gasdurchgang 2e anliegt.

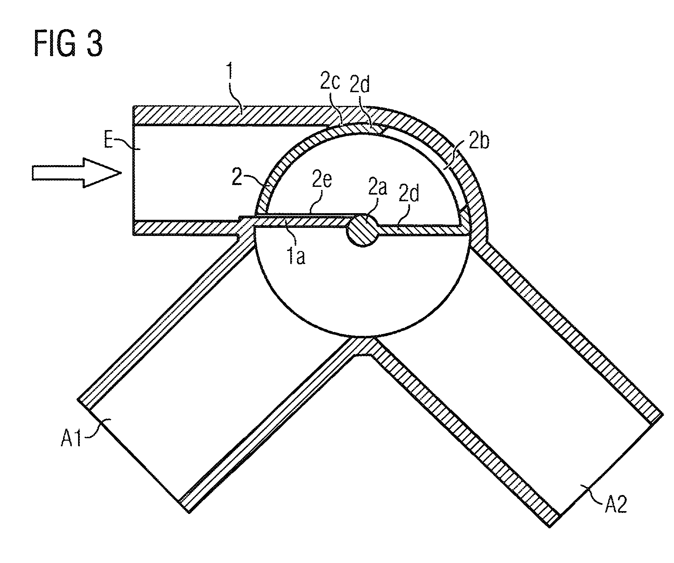

In Fig. 3 ist das Abgasrückführventil für ein Kraftfahrzeug im Querschnitt für die völlig geschlossene Position dargestellt. Das bedeutet, dass das in Pfeilrichtung durch den Gaseintritt E eintretende Abgas weder durch den ersten Gasaustritt A1 noch durch den zu diesem benachbart angeordneten zweiten Gasaustritt A2 gelangen kann. Dies wird zum einen dadurch erreicht, dass die Sperrwand 1a in dieser geschlossenen Position des Abgasrückführventils bündig am Gasdurchgang 2e anliegt. Zum anderen verhindert die Trennwand 2d ebenfalls den Gasdurchtritt zu dem ersten Gasaustritt A1 und dem zweiten Gasaustritt A2. Wird der Ventilkörper 2 im Uhrzeigersinn gedreht (nicht dargestellt), so wird das Abgasrückführventil für ein Kraftfahrzeug zunächst für den zweiten Gasaustritt A2 geöffnet beziehungsweise freigeschaltet.

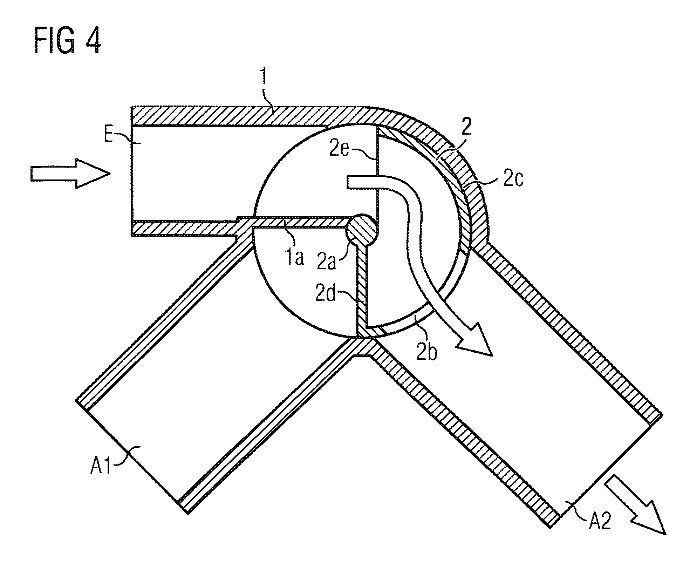

In Fig. 4 ist das Abgasrückführventil für ein Kraftfahrzeug im Querschnitt in der für den zweiten Gasaustritt A2 geöffneten Position dargestellt. Im Vergleich zu der in Fig. 3 dargestellten Position wurde dabei der Ventilkörper 2 um 90° im Uhrzeigersinn verdreht. Das in Pfeilrichtung in den Gaseintritt E einströmende Abgas gelangt dann über den Gasdurchgang 2e und durch die Durchtrittsöffnung 2b des Ventilkörpers 2 in den zweiten Gasaustritt A2. Die Trennwand 2d verhindert dabei einen Gasdurchtritt in den ersten Gasaustritt A1 des Abgasrückführventils. Soll zusätzlich auch der erste Gasaustritt A1 für das Abgas geöffnet werden, so ist eine weitere Verdrehung des Ventilkörpers 2 im Uhrzeigersinn erforderlich (nicht dargestellt).

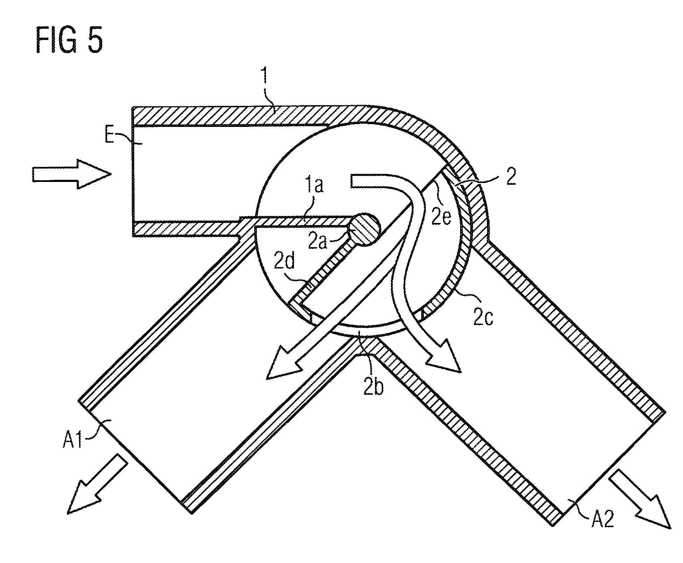

In Fig. 5 ist das Abgasrückführventil für ein Kraftfahrzeug im Querschnitt in der für den ersten Gasaustritt A1 und den zweiten Gasaustritt A2 geöffneten Position dargestellt. Ausgehend von der in Fig. 4 dargestellten Position ist es hierzu erforderlich, den im Ventilgehäuse 1 angeordneten Ventilkörper 2 nochmals um 45° im Uhrzeigersinn zu verdrehen. Das durch den Gaseintritt E in das Abgasrückführventil gelangende Abgas strömt dabei wieder durch den Gasdurchgang 2e und die Durchtrittsöffnung 2b durch das Abgasrückführventil in Pfeilrichtung. Die Durchtrittsöffnung 2b umfasst jedoch in dieser Position sowohl den ersten Gasaustritt A1 als auch den zweiten zu diesem benachbart angeordneten Gasaustritt A2. Soll die gesamte Menge an Abgas ausschließlich durch den ersten Gasaustritt A1 strömen, so ist eine weitere Verdrehung des Ventilkörpers 2 im Uhrzeigersinn erforderlich (nicht dargestellt).

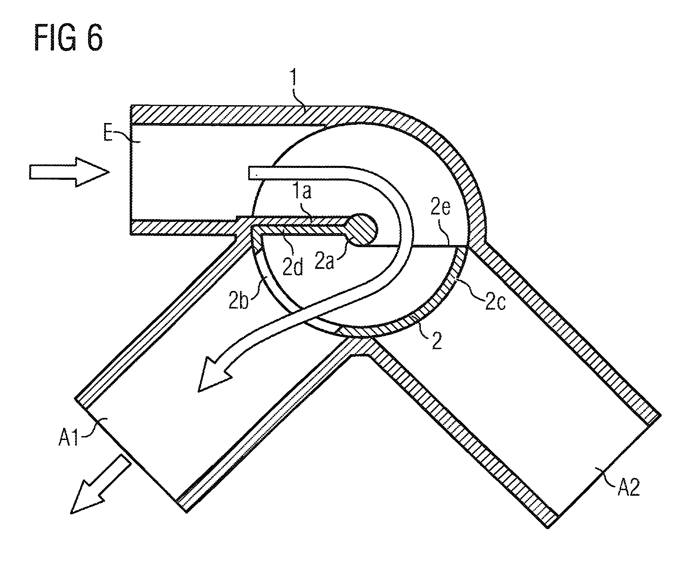

In Fig. 6 ist das Abgasrückführventil für ein Kraftfahrzeug in der ausschließlich für den ersten Gasaustritt A1 geöffneten Position dargestellt. Ausgehend von der in Fig. 5 dargestellten Position ist es dazu erneut erforderlich, den Ventilkörper 2 um weitere 45° im Ventilgehäuse 1 zu verdrehen. Das durch den Gaseintritt E gelangende Abgas strömt dann in Pfeilrichtung über den Gasdurchgang 2e und der Durchtrittsöffnung 2b in den ersten Gasaustritt A1. Der zweite Gasaustritt A2 ist dabei gesperrt, da die Durchtrittsöffnung 2b ausschließlich dem ersten Gasaustritt A1 zugewandt ist. In dieser Position liegt die Trennwand 2d bündig an der Sperrwand 1a des Ventilgehäuses 1 an. Das Abgasrückführventil baut relativ kompakt, da als Gaseintritt E, als erster Gasaustritt A1 und als zweiter Gasaustritt A2 jeweils Rohrstücke angeordnet sind, deren Längsachse auf gleicher Ebene liegen, wobei die Längsachsen des ersten Gasaustritts A1 und des zweiten Gasaustritts A2 im Winkel von 90° zueinander verlaufen.

## Patentansprüche

1. Abgasrückführventil für ein Kraftfahrzeug, das aus einem rohrförmigen Ventilgehäuse (1) besteht, das einen Gaseintritt E, einen ersten Gasaustritt A1 und einen zu diesem benachbart angeordneten zweiten Gasaustritt A2 aufweist, die jeweils von der Mantelaußenfläche des rohrförmigen Ventilgehäuses (1) abzweigen, bei dem innerhalb des rohrförmigen Ventilgehäuses (1) ein drehbar gelagerter Ventilkörper (2) angeordnet ist, der als Hohlkörper mit einer halbzylinderförmigen Mantelfläche (2c), die eine seitliche Durchtrittsöffnung (2b) aufweist, ausgebildet ist, wobei die Längsachse des Zylinders, der die halbzylinderförmige Mantelfläche (2c) definiert, die Drehachse (2a) des Ventilkörpers (2) bildet, und wobei zwischen der Drehachse (2a) und der halbzylinderförmigen Mantelfläche (2c) direkt gegenüber der seitlichen Durchtrittsöffnung (2b) eine Trennwand (2d) angeordnet ist und zwischen der Drehachse (2a) und der halbzylinderförmigen Mantelfläche (2c) direkt gegenüber dem Bereich ohne Durchtrittsöffnung ein Gasdurchgang (2e) angeordnet ist, bei dem der Gaseintritt (E) in der Draufsicht gesehen auf seiner dem ersten Gasaustritt (A1) und dem zweiten Gasaustritt (A2) zugewandten Seite eine im Ventilgehäuse (1) innen senkrecht angeordnete Sperrwand (1a) aufweist, deren Höhe mindestens der Länge (L) des Ventilkörpers (2) entspricht und die in der geschlossenen Position des Abgasrückführventils bündig am Gasdurchgang (2e) anliegt.

2. Abgasrückführventil nach Anspruch 1, bei dem als Drehachse (2a) eine Welle senkrecht angeordnet ist.

3. Abgasrückführventil nach Anspruch 1 oder Anspruch 2, bei dem als Gaseintritt (E), als erster Gasaustritt (A1) und als zweiter Gasaustritt (A2) jeweils Rohrstücke angeordnet sind, deren Längsachsen auf gleicher Ebene liegen.

4. Abgasrückführventil nach einem der Ansprüche 1 bis 3, bei dem die Durchtrittsöffnung (2b) in der Seitenansicht kreisförmig ausgebildet ist.

5. Abgasrückführventil nach einem der Ansprüche 1 bis 4, bei dem die Längsachsen des ersten Gasaustritts (A1) und des zweiten Gasaustritts (A2) im Winkel von 90° zueinander verlaufen.

## Claims

1. Exhaust gas recirculation valve for a motor vehicle, which comprises a tubular valve housing (1), which has a gas inlet (E), a first gas outlet A1 and a second gas outlet A2 arranged proximate thereto, each of which branches off from the lateral outer surface of the tubular valve housing (1), in which there is arranged within the tubular valve housing (1) a rotatably supported valve body (2), which is designed as a hollow body with a semi-cylindrical lateral surface (2c) having a lateral penetration opening (2b), the longitudinal axis of the cylinder which defines the semi-cylindrical lateral surface (2c) forming the axis of rotation (2a) of the valve body (2), and a partition wall (2d) being arranged between the axis of rotation (2a) and the semi-cylindrical lateral surface (2c), directly opposite the lateral penetration opening (2b), and a gas passage (2e) being arranged between the axis of rotation (2a) and the semi-cylindrical lateral surface (2c), directly opposite the area without a penetration opening, in which, in plan view, the gas inlet (E) has a blocking wall (1a) on the side thereof facing the first gas outlet (A1) and the second gas outlet (A2), said blocking wall being arranged perpendicularly inside the valve housing (1) and having a height corresponding to at least the length (L) of the valve body (2) and resting flush against the gas passage (2e) in the closed position of the exhaust gas recirculation valve.

2. Exhaust gas recirculation valve according to Claim 1, in which a shaft is arranged perpendicularly as the axis of rotation (2a).

3. Exhaust gas recirculation valve according to Claim 1 or Claim 2, in which pieces of tube, the longitudinal axes of which lie in the same plane, are provided as the gas inlet (E), the first gas outlet (A1) and the second gas outlet (A2).

4. Exhaust gas recirculation valve according to one of Claims 1 to 3, in which the penetration opening (2b) is of circular design in side view.

5. Exhaust gas recirculation valve according to one of Claims 1 to 4, in which the longitudinal axes of the first gas outlet (A1) and of the second gas outlet (A2) are at an angle of 90° to one another.

## Revendications

1. Vanne de recyclage de gaz d'échappement pour un véhicule automobile, qui est constituée d'un corps (1) de vanne tubulaire, qui a une entrée (E) pour le gaz, une première sortie (A1) pour le gaz et une deuxième sortie (A2) pour le gaz proche de celle-ci, lesquelles bifurquent respectivement de la surface extérieure latérale du corps (1) de vanne tubulaire, dans laquelle il est monté à l'intérieur du corps (1) de vanne tubulaire un obturateur (2), qui est monté tournant et qui est constitué sous la forme d'une pièce creuse ayant une surface (12) latérale hémicylindrique, qui a une ouverture (2b) latérale de passage, l'axe longitudinal du cylindre qui définit la surface (2c) latérale hémicylindrique formant l'axe (2a) de rotation de l'obturateur (2), et dans laquelle il est monté, entre l'axe (2a) de rotation et la surface (2c) latérale hémicylindrique, directement en face de l'ouverture (2b) de passage latérale, une cloison (2d) et il est monté, entre l'axe (2a) de rotation et la surface (2c) latérale hémicylindrique, directement en face de la zone sans ouverture de passage, un passage (2e) pour du gaz, dans laquelle l'entrée (E) pour du gaz en vue en plan a, du côté tourné vers la première sortie (A1) pour du gaz et la deuxième sortie (A2) pour du gaz, une paroi (1a) d'arrêt, qui est disposée perpendiculairement vers l'intérieur, dont la hauteur correspond au moins à la longueur (L) de l'obturateur (2), et qui, en la position fermée de la vanne de recyclage des gaz d'échappement, s'applique au ras du passage (2e) pour du gaz.

2. Vanne de recyclage de gaz d'échappement suivant la revendication 1, dans laquelle un arbre est monté verticalement en tant qu'axe (2a) de rotation.

3. Vanne de recyclage de gaz d'échappement suivant la revendication 1 ou la revendication 2, dans laquelle des tronçons tubulaires, dont les axes longitudinaux sont dans un même plan, sont montés respectivement comme entrée (E) pour du gaz comme première sortie (A1) pour du gaz ou comme deuxième sortie (A2) pour du gaz.

4. Vanne de recyclage de gaz d'échappement suivant l'une des revendications 1 à 3, dans laquelle l'ouverture (2b) de passage est de forme circulaire dans la vue de côté.

5. Vanne de recyclage de gaz d'échappement suivant l'une des revendications 1 à 4, dans laquelle les axes longitudinaux de la première sortie (A1) pour du gaz et de la deuxième sortie (A2) pour du gaz font entre eux un angle de 90°.
